# EUROPÄISCHE PATENTSCHRIFT

(11) **EP 1 900 069 B1**
(45) Veröffentlichungstag und Bekanntmachung des Hinweises auf die Patenterteilung: **30.11.2016**
(21) Anmeldenummer: 06755014.5
(22) Anmeldetag: 04.05.2006
(51) Int. Cl.: H01R 39/34, H01R 43/10, H01R 39/14, H02K 13/02, H02K 11/40

(54) **SCHLEIFRINGBAUGRUPPE FÜR EINEN ROTOR EINER ELEKTRISCHEN MASCHINE, ELEKTRISCHE MASCHINE MIT EINER SCHLEIFRINGBAUGRUPPE SOWIE VERFAHREN ZUR HERSTELLUNG EINER SCHLEIFRINGBAUGRUPPE**
SLIP-RING MODULE FOR A ROTOR OF AN ELECTRIC MACHINE ELECTRIC MACHINE WITH A SLIP RING MODULE AND METHOD FOR PRODUCTION OF A SLIP RING MODULE
ENSEMBLE BAGUES COLLECTRICES POUR LE ROTOR D'UNE MACHINE ELECTRIQUE, MACHINE ELECTRIQUE DOTEE D'UN ENSEMBLE BAGUES COLLECTRICES ET PROCEDE POUR FABRIQUER UN ENSEMBLE BAGUES COLLECTRICES

(30) Priorität: 30.06.2005 DE 102005031535
(43) Veröffentlichungstag der Anmeldung: 19.03.2008
(73) Patentinhaber: ROBERT BOSCH GMBH, 70442 Stuttgart (DE)
(72) Erfinder: HERBOLD, Klaus, 71679 Asperg (DE)
(86) Internationale Anmeldenummer: PCT/EP2006/062054
(87) Internationale Veröffentlichungsnummer: WO 2007/003454

(56) Entgegenhaltungen:
- DE-A1- 3 838 436
- DE-A1- 10 118 004
- DE-A1- 10 316 752
- PATENT ABSTRACTS OF JAPAN Bd. 006, Nr. 251 (E-147), 10. Dezember 1982 (1982-12-10) & JP 57 148560 A (MATSUSHITA DENKO KK), 13. September 1982 (1982-09-13)

## Beschreibung

### Stand der Technik

Die Erfindung betrifft eine Schleifringbaugruppe für einen Rotor einer elektrischen Maschine, eine elektrische Maschine mit einer erfindungsgemäßen Schleifringbaugruppe sowie ein Verfahren zur Herstellung der Schleifringbaugruppe. Bekannte Schleifringbaugruppen dieser Art bestehen aus üblicherweise zwei Schleifringen, die von einem Halter aus Isolierstoff getragen werden. Die beiden Schleifringe sind jeweils mit einem elektrischen Verbindungsleiter verbunden, über dessen Enden jeweils ein Ende einer Erregerspule des Rotors befestigbar ist. Eine derartige Schleifringbaugruppe ist beispielsweise aus der deutschen Offenlegungsschrift DE 38 38 436 A1 bekannt.

Bei der Verwendung derartiger und ähnlicher Schleifringbaugruppen sind jedoch im Zusammenhang mit von den Fahrzeugherstellern geänderten Antriebsmaterialien wie beispielsweise neuen Materialien für Vielkeilriemen bisher unbekannte Probleme mit Drehstromgeneratoren, für die derartige Schleifringbaugruppen vorgesehen sind, aufgetaucht.

Eine Erscheinung ist dabei, dass sich bei der Drehbewegung des Rotors hohe elektrostatische Spannungen aufbauen, die sich nach dem Überschreiten einer undefinierten Grenze plötzlich entladen und dabei die elektronischen Bauteile, wie beispielsweise den Regler für die Erregerspule schädigen oder gar zerstören können. Die Wirkungsweise dieser Spannungserzeugung ist entsprechend dem bekannten "Van-de-Graaf-Generator".

Zur Lösung dieses Problems wurden bereits verschiedene Anstrengungen unternommen. So zeigt die deutsche Offenlegungsschrift DE 101 18 004 A1 ein System, bei dem man beispielsweise durch eine leitfähige Beschichtung des Halters aus Isolierstoff die Ableitung der elektrostatischen Spannung von dem elektromagnetischen Eisenteil über den Minusschleifring an die elektrische Masse der elektrischen Maschine ableiten will. Bei den dort offenbarten Lösungen ist von Nachteil, dass die einwandfreie Funktion der Erregerspule nach der Montage und nach dem Anschluss der Schleifringbaugruppe nicht mehr zuverlässig oder gar nicht mehr getestet werden kann. Dies hat zur Folge, dass dies bezüglich ungeprüfte bzw. unprüfbare Rotoren unter Umständen unerkannt schadhaft sind und so weiter im kostenintensiven Herstellungsprozess verarbeitet werden, obwohl diese längst Ausschuss sind.

Aus dem Dokument DE 103 16 752 A1 sind Schleifringanordnungen bekannt, die mittels weiteren Leiterelementen aus Widerstandsmaterial, oder plattenförmigen Widerständen oder ein Minusgleitkontaktelement und eine Leiterschiene haltenden, kunststoffhaltigen Spritzgussteilen mit leitfähigen Anteilen eine elektrische Verbindung zwischen Eisenteilen und Schleifring bilden.

### Vorteile der Erfindung

Die erfindungsgemäße Schleifringbaugruppe mit den Merkmalen des Hauptanspruchs hat den Vorteil, dass durch den weiteren geformten Leiter, welcher eine direkte elektrische Verbindung von der ersten Verbindungsleitung zu einer Oberfläche der Schleifringbaugruppe bildet, eine Hochspannungsprüfung der Erregerspule des Läufers durchgeführt werden kann. Diese Hochspannungsprüfung dient sowohl während der Fertigung, als auch nach der Erprobung zur Überprüfung der Wicklung auf Kurzschlüsse zur so genannten Läufermasse, d.h. zu den magnetischen Teilen des Läufers bzw. Rotors. Sieht man vor, dass der weitere geformte Leiter als separates Bauteil auf den zumindest einen ersten Verbindungsleiter aufgesetzt ist, hat die damit verbundene Vorfertigung den Vorteil, dass ein konkretes, genau dimensioniertes Bauteil vorgefertigt werden kann, von dem keine wesentlichen Toleranzschwankungen ausgehen und somit dieses separate Bauteil eine zuverlässige und genaue elektrische Verbindung von dem ersten Verbindungsleiter zu einer Oberfläche der Schleifringbaugruppe bildet. Bildet man den weiteren geformten Leiter durch Anformen auf den zumindest einen ersten Verbindungsleiter aus, so lässt sich durch Anspritzen dieses weiteren geformten Leiters ebenfalls ein genauer weiterer geformter Leiter erzeugen, der qualitativ hochwertig und präzise ist.

Durch die in den Unteransprüchen aufgeführten Maßnahmen sind vorteilhafte Weiterbildungen der Schleifringbaugruppe nach dem Hauptanspruch möglich.

Weist der weitere geformte Leiter einen Materialbereich auf, der einen Hinterschnitt bildet und in einen Hinterschnitt des Verbindungsleiters eingreift, so erreicht man insbesondere in der Ausführung als separates Bauteil eine sichere radiale Lage.

Damit der weitere geformte Leiter keinen Kurzschluss der Erregerwicklung verursacht, ist vorgesehen, dass dieser weitere geformte Leiter eine Leitfähigkeit von 1E5Ωcm bis ca. 1E12Ωcm aufweist. Dieser ermöglicht ausreichend hohe Ströme, um die elektrostatische Aufladung zu vermeiden. Gleichzeitig ist der Einfluss auf den Erregerstrom vertretbar minimal.

Wird der weitere geformte Leiter zwischen dem ersten Schleifring und dem vom ersten Schleifring abgewandten Ende der Verbindungsleitung angeordnet, so ist es möglich, im montierten Zustand den geformten Leiter mit einem Innenring eines Wälzlagers zu kontaktieren und so die elektrostatische Ladung von den magnetischen Teilen über deren Welle, den Innenring des Lagers, den geformten Leiter und den Verbindungsleiter abzuführen. Diese Anordnung trägt den üblichen Anordnungen von Kompaktgeneratoren (zweiflutige Läufer) Rechnung, wie sie im eingangs zitierten Stand der Technik angegeben sind. Ist der erste Schleifring zwischen den vom ersten Schleifring abgewandten Ende der Verbindungsleitung und dem weiteren geformten Leiter angeordnet, so wird mit dieser Anordnung einer anderen Variante von Bauarten von Kompaktgeneratoren entsprochen, bei denen die Schleifringe zwischen dem Stützlager bzw. Wälzlager und dem magnetischen Teil des Läufers angeordnet sind. Auch hier ist dann eine Ableitung der Ladung über den geformten Leiter an einen Innenring des Wälzlagers möglich.

Hat der weitere geformte Leiter einen höheren spezifischen elektrischen Widerstand als der Verbindungsleiter, jedoch einen kleineren spezifischen elektrischen Widerstand als der Isolierstoff, so ergibt sich daraus ein eindeutiger Pfad bzw. Weg für die Ableitung der elektrostatischen Ladung.

Wählt man für den geformten Leiter als Werkstoff einen polymeren Verbundwerkstoff, der vorzugsweise eine Mischung aus polymerem, isolierendem Werkstoff und leitfähigem Werkstoff besteht, so erhält man einen geformten Leiter, der mittels eines Spritzgussverfahrens hergestellt werden kann und somit hinsichtlich seiner Form verhältnismäßig frei gestaltet werden kann. Eine Anpassung an die örtlichen Gegebenheiten ist dadurch besonders gut möglich. Darüber hinaus besteht die Möglichkeit, diesen geformten Leiter an den Isolierstoff der Schleifringbaugruppe anzuspritzen, die beispielsweise aus ähnlichen Werkstoffen besteht, wodurch eine mechanische Anbindung des geformten Leiters an den einbettenden bzw. haltenden Isolierstoff gut möglich ist. Ein Verrutschen oder Lösen des geformten Leiters ist somit vor der Montage an die elektrische Maschine ausgeschlossen.

Umgreift der geformte Leiter den Verbindungsleiter im Wesentlichen U-förmig bzw. den gesamten Querschnitt des Verbindungsleiters, so erhält man eine besonders großflächige Anbindung des geformten Leiters an den Verbindungsleiter. Eine Verkrallung oder reibschlüssige oder formschlüssige Verbindung zwischen Verbindungsleiter und geformtem Leiter ist so besonders gut möglich. Der geformte Leiter kann somit besonders gut am Verbindungsleiter halten. Nach einer weiteren Ausgestaltung der Erfindung ist vorgesehen, dass der erste Verbindungsleiter von dem weiteren geformten Leiter in einem axialen Abschnitt überdeckt ist und dort der erste Verbindungsleiter von Isolierstoff der Schleifringbaugruppe zumindest teilweise umgriffen ist, wobei eine Breite des Isolierstoffs in Umfangsrichtung größer als eine Breite des weiteren geformten Leiters in Umfangsrichtung ist. Diese Maßnahme ermöglicht eine bestimmte Zusammenwirkung mit der elektrischen Maschine. Durch die unterschiedlichen Breiten wird einerseits die Winkelposition der Schleifringbaugruppe am Wellenende bzw. am Läufer gesichert. Hierfür dient die Breite des Isolierstoffs. Dadurch, dass die Breite des weiteren geformten Leiters in Umfangsrichtung jedoch kleiner ist, als die Breite des Isolierstoffs, wird eine Kontaktierung des geformten Leiters in Umfangsrichtung an Bereiche der Welle bzw. des Läufers ausgeschlossen. Es kann somit zunächst keine elektrische Verbindung zwischen dem weiteren geformten Leiter und den Eisen- bzw. Magnetteilen des Läufers hergestellt werden. Dieses ermöglicht, nach dem Anschluss der Erregerwicklung an die Schleifringbaugruppe einen Funktionstest der Erregerwicklung, da der geformte Leiter keinen Kurzschluss verursachen kann.

Definiert der weitere geformte Leiter an seiner axialen Position und seiner Winkelposition in Bezug zu einer Achse der Schleifringe einen größeren Radius der Schleifringbaugruppe, als diese an anderer Winkelposition der gleichen axialen Position aufweist, so kann bei aufgeschobenem Innenring eines Wälzlagers ein guter elektrischer Kontakt zwischen metallischem Wälzlagerinnenring und geformtem Leiter eingerichtet werden.

Des Weiteren ist eine elektrische Maschine vorgesehen, die die erfindungsgemäße Schleifringbaugruppe trägt und die zur Stromversorgung der Erregerspule und zur Ableitung der statischen Elektrizität dient. Eine derartige Kombination ermöglicht eine zuverlässige und sehr genau reproduzierbare Ableitung der statischen Elektrizität. Weist der Rotor schleifringseitig ein Wellenende auf und das Wellenende einen Schlitz mit Schlitzwänden, der sich in Axialrichtung erstreckt und in dem der zumindest eine Verbindungsleiter angeordnet ist, so ist eine besonders platzsparende Anordnung des weiteren Leiters möglich.

Kontaktiert der geformte Leiter das Wellenende nur mittelbar bzw. ist der Strompfad vom ersten Verbindungsleiter an die Masse der Maschine von der Welle und deren im Wesentlichen zylindrischer Außenseite bzw. einem Sitz des Wälzlagers an den Innenring des Wälzlagers und von dort an den weiteren geformten Leiter, so ermöglicht diese Anordnung eben die bereits erwähnte Prüfung der Erregerspule ohne aufgeschobenes Lager.

Ein Abstand zwischen dem geformten Leiter und den Schlitzwänden ermöglicht die mittelbare Kontaktierung des geformten Leiters mit dem Wellenende auf mittelbare Art und Weise.

Zur Ausbildung eines besonders guten Kontakts zwischen dem Wälzlagerinnenring und dem geformten Leiter ist es vorgesehen, dass das montierte Wälzlager den geformten Leiter komprimiert und durch eine dadurch entstehende Pressung einen guten elektrischen Kontakt zwischen dem geformten Leiter und dem Wälzlagerring ermöglicht.

Gemäß einem erfindungsgemäßen Verfahren zur Herstellung einer Schleifringbaugruppe ist vorgesehen, in einem Schritt zumindest eine Verbindungsleitung mit einem elektrisch isolierenden Halter, insbesondere durch einen Umspritzvorgang, zu verbinden und in einem anderen Schritt dieselbe Verbindungsleitung unmittelbar mit einem elektrisch leitfähigen Leiter aus einem Verbundwerkstoff zu verbinden, wobei der Verbundwerkstoff elektrisch leitfähige und elektrisch nicht leitfähige Anteile aufweist.

Durch dieses Verfahren lässt sich eine Ableitung von statischer Elektrizität erreichen, die über einen eng begrenzten Pfad abläuft. Ist die Verbindung über einen Abschnitt in Richtung ihrer längeren Erstreckung, d.h. in die Richtung, die durch den Abstand zwischen den Schleifringen und den Anschlüssen für die Erregerwicklung definiert ist, sowohl von dem elektrisch isolierenden Halter als auch von dem elektrisch leitfähigen Halter umgeben, so dass eine gemeinsame Hülle gebildet wird, wobei sich der isolierende Halter und der elektrisch leitfähige Leiter zu der gemeinsamen Hülle ergänzen, so ergibt dies eine besonders kompakte Gestaltung bei gleichzeitigem Schutz der Verbindungsleitung gegenüber korrosiven Angriffen.

Eine besonders kompakte und zuverlässige Gestaltung der Schleifringbaugruppe ergibt sich dann, wenn der elektrisch isolierende Halter durch Umspritzen zumindest der einen Verbindungsleitung bei anschließendem Erstarren gefertigt ist und vorzugsweise auch der elektrisch leitfähige Leiter, der die elektrostatische Ableitung sicherstellen soll, um Oberflächenabschnitte der Verbindungsleitung gespritzt wird.

Es ist vorgesehen, dass auch der elektrisch leitfähige Leiter aus dem Verbundwerkstoff an die Verbindungsleitung gespritzt wird und vorzugsweise eine Aussparung des Isolierstoffs, der in einem Schritt zuvor an die Verbindungsleitung gespritzt wurde, vollständig ergänzt. Man erhält eine insgesamt dichte Hülle, Medienangriffe, die zur Korrosion des Verbindungsleiter führen könnten, sind praktisch nicht möglich. Die Zuverlässigkeit ist erhöht.

### Zeichnungen

In den Zeichnungen sind Ausführungsbeispiele einer erfindungsgemäßen Schleifringanordnung, einer elektrischen Maschine sowie schematisch ein Verfahren zur Herstellung einer Schleifringanordnung dargestellt. Es zeigen:
Figur 1 einen Drehstromgenerator eines Typs, wie er seit Anfang der 90er-Jahre offenkundig vorbenutzt wird,
Figur 2 eine räumliche Ansicht einer herkömmlichen Schleifringbaugruppe, wie sie bei einem Generator gemäß Figur 1 verwendet wird,
Figur 3 eine räumliche Ansicht einer erfindungsgemäßen Schleifringbaugruppe in einem ersten Ausführungsbeispiel,
Figur 4 die Schleifringbaugruppe nach einem ersten Spritzgussvorgang.
Figur 5 unabhängig von der Schleifringbaugruppe den geformten Leiter,
Figur 6 die Schleifringbaugruppe im auf die Welle montierten Zustand, wobei der geformte Leiter in Draufsicht zu erkennen ist,
Figur 7 verschiedene mögliche Querschnittsformen eines Stegs mit darauf geformtem bzw. aufgesetztem weiterem Leiter,
Figur 8 einen Querschnitt durch beide Verbindungsleiter der Schleifringbaugruppe,
Figur 9 ein weiteres Ausführungsbeispiel eines geformten Leiters,
Figur 10 ein weiteres Ausführungsbeispiel einer Schleifringbaugruppe, wobei hier die Schleifringe zwischen dem geformten Leiter und einem von dem ersten Schleifring abgewandten Ende der Verbindungsleitung angeordnet ist.
Figur 11 einen Längsschnitt durch die montierte Schleifringbaugruppe,
Figur 12 eine Draufsicht auf die montierte Schleifringbaugruppe und ein montiertes Wälzlager,
Figur 13 ausschnittweise eine räumliche Darstellung des Verbindungsleiters mit einem geformten Leiter für ein weiteres Ausführungsbeispiel einer Schleifringbaugruppe,
Figur 14 einen Querschnitt durch den Verbindungsleiter und den geformten Leiter aus Figur 13,
Figur 15 eine Schleifringbaugruppe mit dem Verbindungsleiter und dem geformten Leiter nach Figur 13,
Figur 16 einen Querschnitt durch den speziellen Steg der Schleifringbaugruppe aus Figur 15,
Figur 17 in schematischer Darstellung eine elektrische Maschine mit einem Rotor. Beschreibung

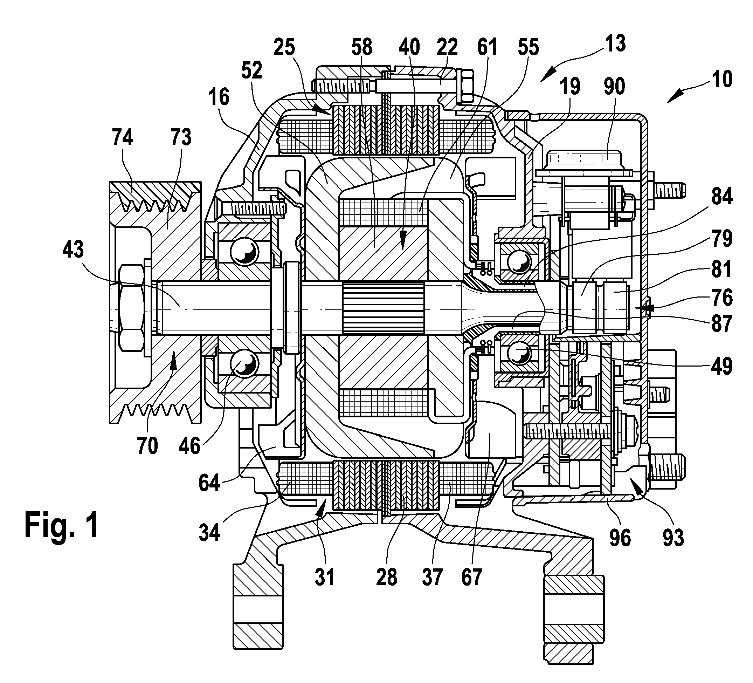

Figur 1 zeigt eine elektrische Maschine 10, ausgeführt als Drehstromgenerator für Kraftfahrzeuge. Diese elektrische Maschine 10 besteht aus einem Gehäuse 13, das zweiteilig ausgeführt ist. Dieses Gehäuse 13 weist als Gehäuseteile ein antriebsseitiges Lagerschild 16 und ein so genanntes bürstenseitiges Lagerschild 19 auf. Zwischen diesen beiden Gehäuseteilen 16 und 19 ist mittels Gehäuseschrauben 22 ein Stator 25 gehalten. Dieser Stator 25 besteht aus einem Ständerblechpaket 28, in dessen hier nicht dargestellte Nuten eine Ständerwicklung 31 eingesetzt ist. Von dieser Ständerwicklung 31 sind ein antriebsseitiger Wickelkopf 34 und ein bürstenseitiger Wickelkopf 37 zu erkennen.
Innerhalb des Ständerblechpakets 28 ist ein Rotor 40 angeordnet. Dieser Rotor 40 ist über eine Welle 43 sowohl im Antriebslagerschild 16 als auch im bürstenseitigen Lagerschild 19 mittels zweier Lager, nämlich einem antriebsseitigen Lager 46 und einem rückwärtigen Lager 49 gelagert. Zwischen den beiden Lagern 46 und 49 sind die magnetischen Teile des Rotors 40 positioniert. Zwischen einer ersten Polradhälfte 52 und einer zweiten Polradhälfte 55 ist ein Polkern 58 angeordnet. Um den Polkern 58 herum ist eine Erregerwicklung 61 positioniert. Die Polradhälfte 52, der Polkern 58, die Erregerwicklung 61 und die Polradhälfte 55 sind von der Welle 43 getragen. Auf der Seite der Polradhälfte 52, die von der Erregerwicklung 61 abgewandt ist, ist ein erster Lüfter 64 und auf der entsprechenden Gegenseite an der anderen Polradhälfte 55 ein zweiter Lüfter 67 befestigt. Beide Lüfter dienen dazu, aus axialer Richtung Luft anzusaugen und diese durch Öffnungen in den Wickelköpfen 34 bzw. 37 durchzublasen und durch hier nicht gezeigte radial außen angeordnete Öffnungen nach der Erwärmung an die Umgebung abzugeben.

An einem antriebsseitigen Ende 70 der Welle 43 ist mittels einer Schraubenmutter eine Riemenscheibe 73 befestigt. Diese Riemenscheibe dient dazu, den Rotor 40 mittels eines Riemens 74 zu drehen. Am bürstenseitigen Ende der Welle 43 ist eine Schleifringbaugruppe 76 befestigt. Diese Schleifringbaugruppe dient dazu, mittels zweier Schleifringe 79 (Minusschleifring) und 81 (Plusschleifring) die Erregerwicklung 61 zu bestromen. Dazu sind als weitere Verbindungselemente eine erste Verbindungsleitung 84 zwischen dem Minusschleifring 79 und eine zweite Verbindungsleitung 87 als Verbindung zwischen den Plusschleifring 81 und dem anderen Ende der Erregerwicklung 61 vorgesehen. Zur Bestromung der Erregerwicklung 61 gleiten auf den genannten Schleifringen 79 und 81 hier nicht näher bezeichnete Bürsten, die durch einen Regler 90 mit Erregerstrom belastet werden. Des Weiteren ist ein üblicher Gleichrichter 93 vorhanden, der mittels einer Schutzkappe 96 bedeckt ist.

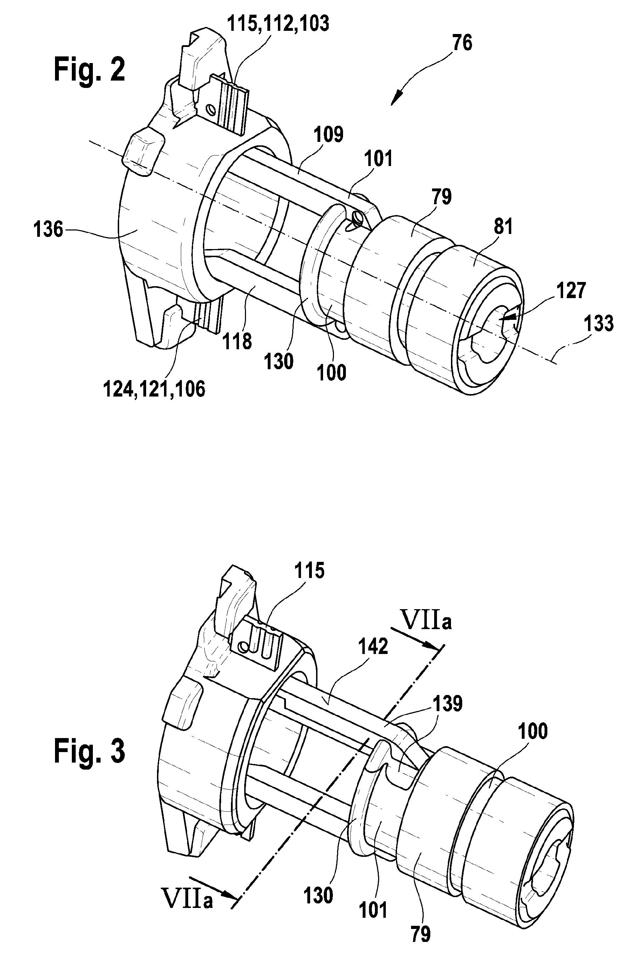

Figur 2 zeigt eine räumliche Darstellung einer Schleifringbaugruppe 76, wie sie bei dem zuvor beschriebenen Generator verwendet wird. Diese Schleifringbaugruppe trägt die bereits erwähnten Schleifringe 79 und 81. Beide Schleifringe 79 und 81 sind durch einen Halter 100 gehalten. Der Halter 100 ist ein komplexes Gebilde, das mittels eines Spritzgussverfahrens entstanden ist und ist aus einem Isolierstoff 101 geformt. Dieser Halter 100 trägt verborgen in seinem Inneren zwei Verbindungsleiter 103 und 106. Der Verbindungsleiter 103 verbindet den ersten Schleifring 79 durch einen Steg 109 hindurch mit einer einstückig mit dem Verbindungsleiter 103 ausgeführten Kontaktfahne 112, die ein vom ersten Schleifring 79 abgewandtes Ende 115 darstellt. Der Verbindungsleiter 106 verbindet den zweiten Schleifring 81 durch den Steg 118 hindurch mit einer ebenso einstückig ausgeführten Kontaktfahne 121, die ebenfalls ein vom Schleifring 81 abgewandtes Ende 124 des Verbindungsleiters 106 darstellt. Der Verbindungsleiter 106 ist wie der Verbindungsleiter 103 auch, innerhalb des Halters 100 angeordnet. Der Verbindungsleiter 106 tritt durch den Schleifring 79 hindurch. Die Schleifringe 79 und 81 bilden eine äußere Begrenzung für den Halter 100. Radial innerhalb der Schleifringe 79 und 81 ist eine Öffnung 127 vorgesehen, die hohlzylindrisch ausgeführt ist. Diese Öffnung 127 ist später im montierten Zustand durch einen wellenseitigen Zapfen besetzt. Dieser im Grunde genommen hohlzylindrische Abschnitt zwischen der endseitigen Öffnung 127 und dem Übergang des Halters 100 in die zwei Stege 109 und 118 wird durch einen Wulst 130 begrenzt, der in etwa ringförmig um die Drehachse 133 positioniert ist. Am von dem Wulst 130 abgewandten Ende der Stege 109 bzw. 118 schließt sich ein Ringbereich 136 an, der die Position der Enden 115 stabilisiert, indem diese Enden 115 bzw. 124 bzw. Abschnitte dieses Verbindungsleiters 103 bzw. 106 in diesem Ringbereich 136 eingebettet sind.

Der Halter 100 umfasst sowohl den innerhalb der Schleifringe 79 und 81 angeordneten Anteil des Halterteils 100 als auch den Bereich rund um den Wulst 130, die Isolierung der Stege 109 und 118 sowie den Ringbereich 136.

Wie leicht erkennbar ist, zeigt die Figur 3 eine zu der in Figur 2 dargestellten Schleifringbaugruppe sehr ähnliche Schleifringbaugruppe. Der Unterschied besteht darin, dass der Steg 109 sowie ein Bereich des Wulstes 130 als auch ein Teil des restlichen Halters 100 unterschiedlich gestaltet ist.

So bestehen zwar große Teile des Halters 100 und dessen Isolierung der Stege 118 und 109 aus dem Isolierstoff 101. Der Steg 109 ist mit dem angrenzenden Bereich des Wulstes 130 und einem kleinen Abschnitt des ringzylindrischen Bereichs des Halters 100 durch ein anderes Material ersetzt. Dieses Material ist gemäß diesem Ausführungsbeispiel ebenfalls ein spitzgießfähiges Material, das hier als polymerer Verbundwerkstoff bezeichnet ist. Dieser polymere Verbundwerkstoff ist eine Mischung aus polymerem isolierenden Werkstoff, beispielsweise PA 66 und einem leitfähigen Werkstoff bzw. Material, beispielsweise Graphit oder metallische, ursprünglich in Pulverform vorliegende Bestandteile. Dieses Material bildet hier einen geformten Leiter 139, der eine direkte elektrische Verbindung von der ersten, im Steg 109 eingebetteten Verbindungsleitung 103 zu einer Oberfläche 142 der Schleifringbaugruppe 76 bildet. Die Oberfläche 142 ist in diesem Ausführungsbeispiel durch den geformten Leiter 139 bzw. das teilweise um den Verbindungsleiter 103 gespritzte Material gebildet. "Geformter" Leiter 139 bedeutet, dass die Form des Leiters 139 insgesamt durch die Verwendung einer Form entstanden ist und seine Oberflächengestalt bzw. -kontur durch die konturgebende Herstellungsform bedingt ist.

Es ist somit eine Schleifringbaugruppe 76 für einen Rotor 40 einer elektrischen Maschine 10, insbesondere einen Drehstromgenerator, vorgesehen, wobei diese Schleifringbaugruppe 76 zumindest einen ersten Schleifring 79 aufweist. Im Isolierstoff 101 der Schleifringbaugruppe 76, ist abschnittsweise zumindest eine erste Verbindungsleitung 103 gehalten, vorzugsweise eingebettet, die mit dem zumindest einen ersten Schleifring 79 elektrisch leitfähig verbunden ist. Diese erste Verbindungsleitung 103 hat ein vom ersten Schleifring 79 abgewandtes Ende 115, das für eine elektrische Verbindung mit einer Erregerspule 61 vorgesehen ist. Der Schleifring der Baugruppe 76 weist ein weiteren geformten Leiter 139 auf, der eine direkte elektrische Verbindung von der ersten Verbindungsleitung 103 zu einer Oberfläche 142 der Schleifringbaugruppe 76 bildet.

Es ist vorgesehen, dass der weitere geformte Leiter 139 durch ein Spritzgussverfahren auf den zumindest einen ersten Verbindungsleiter 103 aufgespritzt und somit auf diesem Verbindungsleiter 103 angeformt ist. Der angeformte Leiter soll im Allgemeinen, d.h. nicht nur für dieses Ausführungsbeispiel, eine Leitfähigkeit von 1E5 Ωcm bis 1E12 Ωcm aufweisen. Diese Leitfähigkeit bezieht sich dabei auf die Materialstärke, die sich zwischen dem Verbindungsleiter 103 und der Oberfläche 142 bezieht. Für die einwandfreie Funktion des geformten Leiters 139 ist vorgesehen, dass dieser einen höheren spezifischen elektrischen Widerstand als der Verbindungsleiter 103, jedoch einen kleineren spezifischen elektrischen Widerstand als der Isolierstoff 101 hat. Der Verbindungsleiter 103 ist dabei der Verbindungsleiter, der von dem geformten Leiter 139 zumindest abschnittsweise umgeben ist.

Der weitere geformte Leiter 139 ist zwischen dem ersten Schleifring 79 und dem vom ersten Schleifring 79 abgewandten Ende 115 der Verbindungsleitung 103 angeordnet. Diese Position des geformten Leiters 139 befindet sich vorzugsweise an einer für den Sitz des Lagers 49 vorgesehenen Position.

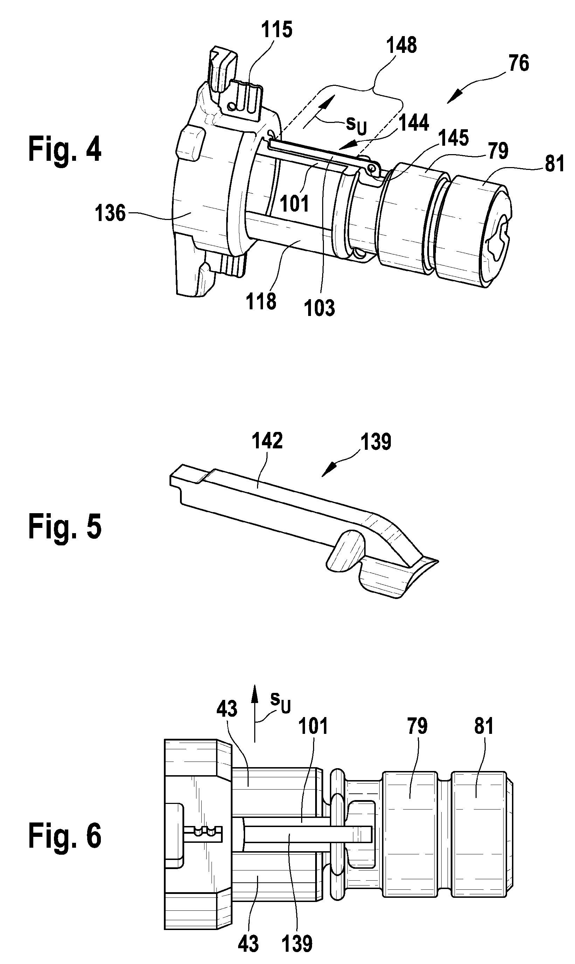

Figur 4 zeigt die Schleifringbaugruppe 76 vor ihrer Fertigstellung. Wie bereits erwähnt, soll die Schleifringbaugruppe 76 gemäß einem ersten Ausführungsbeispiel durch zwei Spritzgussverfahrensschritte hergestellt werden. So ist gemäß einem ersten Verfahrensschritt, dessen Ergebnis in Figur 4 dargestellt ist, vorgesehen, dass die beiden Schleifringe 79 und 81 sowie die an die beiden Schleifringe angeschlossenen, bzw. elektrisch verbundenen Verbindungsleiter 103 und 106 derart mit dem Isolierstoff 101 teilweise umspritzt werden, dass die Außenseite der Schleifringe 79 und 81 freiliegen, die Innenseiten der Schleifringe durch Isolierstoff 101 bedeckt sind sowie der Verbindungssteg 118 von Isolierstoff 101 vollständig umhüllt ist. Desweiteren wird in diesem Verfahrensschritt auch der Ringbereich 136 angegossen. Bei dem Steg 109 ist der Zustand nach diesem ersten Verfahrensschritt derart, dass die Verbindungsleitung 103 in diesem Fall nach radial außen frei und somit an dieser Stelle nicht mit Isolierstoff 101 bedeckt ist. Es ist somit eine Aussparung 148 freigelassen. In dieser Figur ist auch zu erkennen, dass der Verbindungsleiter 103 eine Öffnung 145 aufweist, die später noch eine Funktion erfüllt.

In Figur 5 ist der geformte Leiter 139 für sich betrachtbar. Dieser Abschnitt ergänzt in einer Spritzgussform die Anordnung aus Figur 4 derart, dass die Schleifringbaugruppe gemäß Figur 3 entsteht.

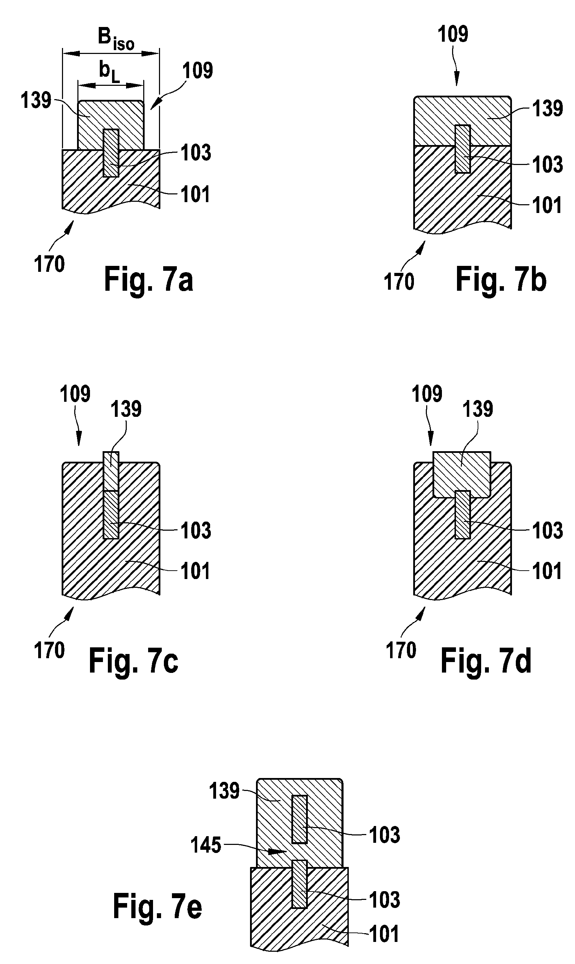

Wie in Figur 4 angedeutet ist, ist der erste Verbindungsleiter 103 von dem weiteren geformten Leiter 139 in einem axialen Abschnitt 148 überdeckt. Der Verbindungsleiter 103 ist hier auch von Isolierstoff 101 der Schleifringbaugruppe 76 zumindest teilweise umgriffen, wie in Figur 4 erkennbar ist. Es ist dabei vorgesehen, dass eine Breite B_{iSO} des Isolierstoffs 101 in Umfangsrichtung s_{U} größer als eine Breite b_{L} des weiterem geformten Leiters 139 in Umfangsrichtung s_{U} ist, siehe auch Figur 6 und 7a.

In Figur 7a bis Figur 7e sind verschiedene Ausführungsformen eines Stegs 109 dargestellt. So zeigt Figur 7a die bevorzugte Ausführungsform, wie sie gemäß dem in Figur 3 skizzierten Schnitt dargestellt ist. Deutlich zu erkennen ist hier der in das Isoliermaterial 101 eingebettete Verbindungsleiter 103, der nach dem ersten Spritzvorgangs an seiner Oberseite frei zugänglich ist. Nach diesem ersten Spritzvorgang wird der geformte Leiter 139 aufgespritzt, in diesem Fall derart, dass der weitere geformte Leiter 139 den Verbindungsleiter 103 im Wesentlichen U-förmig umgreift. Das Ausführungsbeispiel nach Figur 7b zeigt einen geformten Leiter 139, der genauso breit wie das Isoliermaterial 101 bzw. die nicht leitfähige Isolierung des Stegs 109 ist. In Figur 7c ist ein Verbindungsleiter 103 dargstellt, der von einem geformten Leiter 139 überdeckt ist, dessen Breite genauso groß wie die der Verbindungsleitung 103 ist. In Figur 7d ist der geformte Leiter 139 breiter als die Verbindungsleitung 103. Figur 7e zeigt eine Verbindungsleitung 103 mit einer Öffnung 145, die einen Hinterschnitt bildet. Der weitere geformte Leiter 139 hintergreift mit einem Bereich seines Materials diese Öffnung 145 bzw. den Hinterschnitt, so dass dadurch der weitere geformte Leiter 139 nach radial außen in seiner Lage gesichert ist.

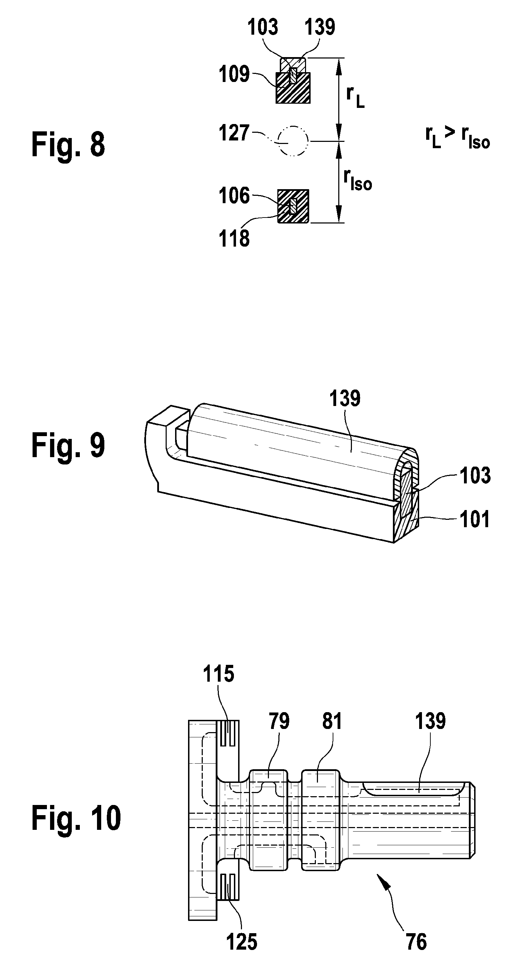

Betrachtet man die Schleifringbaugruppe 76 in einem Schnitt durch die beiden Stege 118 bzw. 109, s. a. Figur 8, so erkennt man mit Bezug zur beschriebenen Öffnung 127, deren Längsachse sich mit einer Drehachse des Rotors 40 deckt, dass die Außenradien der Stege unterschiedlich sind. Dies bedeutet in diesem konkreten Fall, dass der Außenradius r_{Iso} des Stegs 118, also des Stegs, der nicht den geformten Leiter 139 trägt, kleiner ist als der Radius r_{L} des geformten Leiters 139. Dies bedeutet, dass der weitere geformte Leiter 139 an seiner axialen Position und seiner Winkelposition einen größeren Radius r_{L} der Schleifringbaugruppe 76 definiert, als diese an anderer Winkelposition (hier in diesem Fall an der Position des Stegs 118) der gleichen axialen Position aufweist.

Figur 9 zeigt ein weiteres Ausführungsbeispiel eines geformten Leiters 139. So ist beispielsweise vorgesehen, alternativ zu einem auf den Halter 100 aufgespritzten geformten Leiter 139 einen anderweitig vorgeformten Leiter 139 zu verwenden. Dieser vorgeformte Leiter 139 kann beispielsweise auf die erste Verbindungsleitung 103 der halbfertigen Schleifringbaugruppe 76 aufgesetzt werden, wie sie in Figur 4 angedeutet ist. Ein derartiger vorgeformter Leiter 139 kann selbstverständlich auch ausgeführt werden, wie zu Figur 7a bis d beschrieben ist. Darüber hinaus könnte dieser vorgeformte Leiter 139 auch derart vorgeformt sein, dass Vorsprünge an diesem Leiter 139 in einen Hinterschnitt bzw. eine Öffnung 145 eingreifen könnten (Lösung gemäß Figur 7e). Aber auch die Bedingungen, die in der Beschreibung zur Figur 8 formuliert sind, können selbstverständlich auch durch einen vorgeformten Leiter 139 erfüllt sein.

In Figur 10 ist ein weiteres Ausführungsbeispiel einer Schleifringbaugruppe 76 dargestellt. Im Unterschied zu den bisher dargestellten Ausführungsformen ist hier die Position der Schleifringe mit der Position des geformten Leiters 139 vertauscht. Dieses Ausführungsbeispiel trägt den Konstruktionen für elektrische Maschinen, insbesondere Drehstromgeneratoren, Rechnung, deren Wälzlager 49 nicht nahe den magnetischen Teilen des Rotors 40 angeordnet ist, sondern am entfernteren bzw. entferntesten Ende der Welle 43.

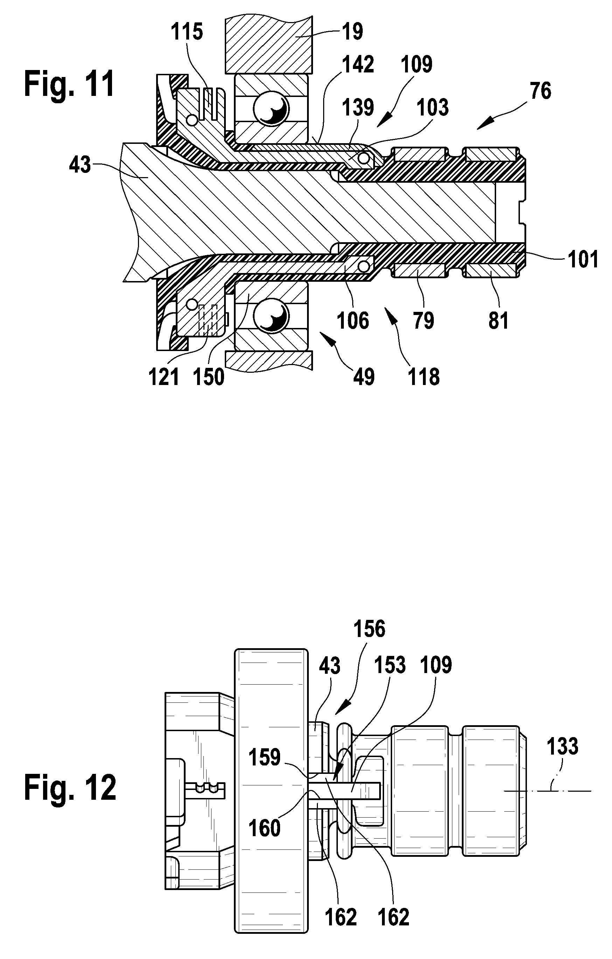

In Figur 11 ist ein Längsschnitt durch die Schleifringbaugruppe 76 dargestellt. Desweiteren ist hierbei das Lager 49 auf die Schleifringbaugruppe 76 montiert. Die Schleifringbaugruppe 76 und ganz besonders der geformte Leiter 139 ist so dimensioniert (siehe auch Figur 8), dass ein auf die Schleifringbaugruppe 76 montiertes Wälzlager 49 den geformten Leiter 139 in radialer Richtung komprimiert. Dies führt dazu, dass die elektrische Kontaktstelle zwischen dem geformten Leiter 139 und einem Wälzlagerring 150 von guter Qualität ist.

Figur 12 zeigt eine Draufsicht auf den geformten Leiter 139. Der geformte Leiter sitzt mit seinem Steg 109 in einem Schlitz 153, der sich in axialer Richtung der Welle 43 erstreckt. Dieser Schlitz 153 im Wellenende 156 weist Schlitzwände 159 und 160 auf, die parallel zueinander und einander gegenüber angeordnet sind. Der in dem Steg 109 angeordnete Verbindungsleiter 103 ist in dem Schlitz 153 angeordnet.

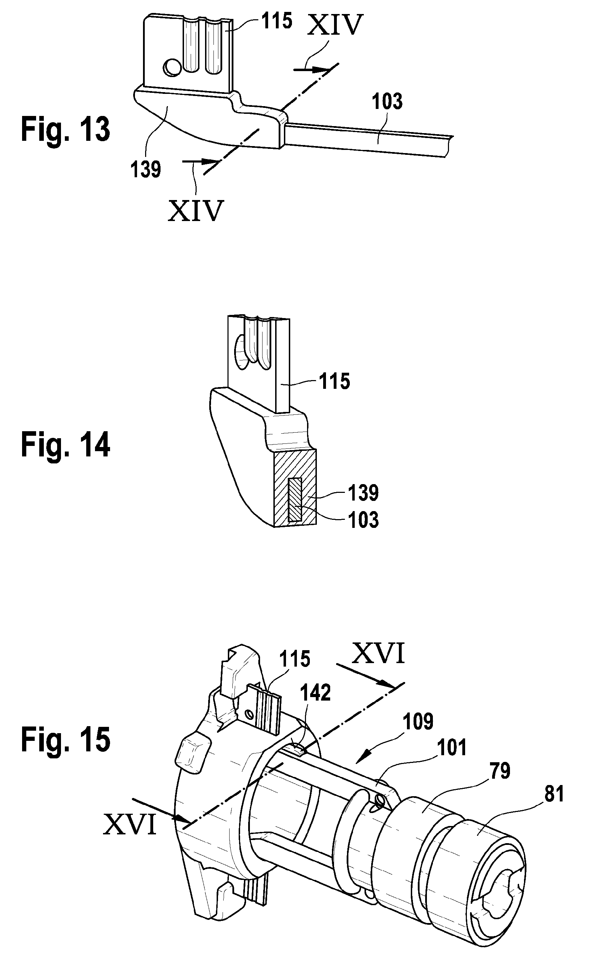

Figur 13 zeigt ausschnittweise eine räumliche Darstellung des Verbindungsleiters 103 mit einem geformten Leiter 139 für ein weiteres Ausführungsbeispiel einer Schleifringbaugruppe 76, die weitgehende Gemeinsamkeiten mit den anderen Ausführungsbeipielen aufweist. Der Verbindungsleiter 103 hat eine gewinkelte Form, so dass der im Steg 109 angeordnete Abschnitt des Verbindungsleiters 103 und der Endabschnitt 115 zwischen sich einen Winkel einschließen. An dieser Winkel- oder "Knie"-Stelle ist der Verbindungsleiter 103 in einem ersten Umspritzvorgang in einer Form von dem geformten Leiter 139 umhüllt worden. Der geformte Leiter 139 umgreift den Verbindungsleiter 103 in diesem Fall um seinen gesamten Querschnitt. Diese Umhüllung des Verbindungsleiters 103 durch das leitfähige Material ist in Figur 14 in einen Querschnitt durch den Verbindungsleiter 103 und den geformten Leiter 139 gut erkennbar.

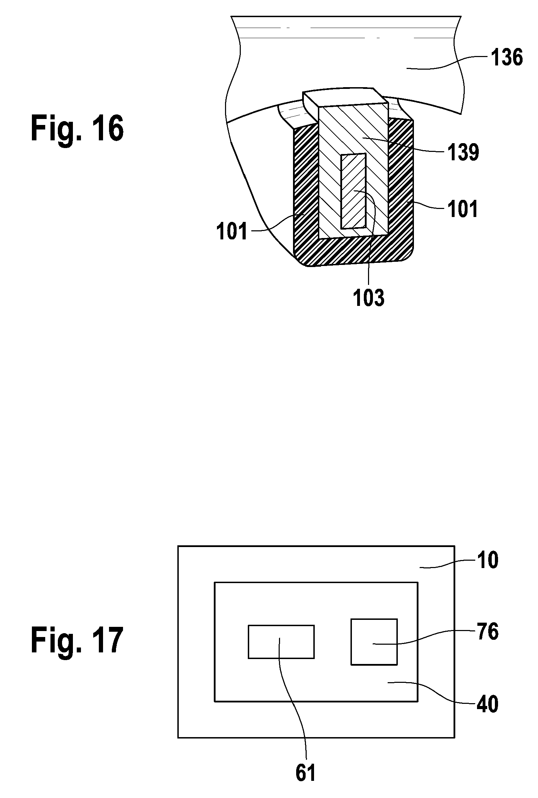

Gemäß der in Figur 15 dargestellten Schleifringbaugruppe 76 ist vorgesehen, dass der geformte Leiter 139 im Bereich des Stegs 109 zu Tage tritt, so dass wie auch schon bei den vorangegangenen Ausführungsbeispielen, s. a. Figur 11, ein Innenring 150 eines aufgesetzten Wälzlagers 49 den geformten Leiter 139 kontaktieren kann. Hier bildet ähnlich zur Darstellung der Figur 7d das Isolatormaterial 101 in Umfangsrichtung ein Kontakthindernis zur Welle 43. Siehe hierzu auch Figur 16 mit einer Querschnittsdarstellung durch den speziellen Steg 109 der Schleifringbaugruppe 76 aus Figur 15. Auch dieser geformte Leiter 139 könnte in einem alternativen Ausführungsbeispiel die Welle 43 direkt kontaktieren.

Wie bereits zu den zuvor erwähnten Ausführungsbeispielen erwähnt, könnte der geformte Leiter 139 auch separat vom Verbindungsleiter 103 geformt sein. Ein solcher Vorformling kann dann bspw. um den Verbindungsleiter 103 gelegt bzw. montiert werden. Anschließend könnte ein Halter 100 in einem Formvorgang um diesen geformten Leiter 139 gespritzt sein.

Figur 17 zeigt in schematischer Darstellung eine elektrische Maschine 10 mit einem Rotor 40. Der Rotor 40 trägt eine Schleifringbaugruppe 76, die die Erregerwicklung 61 bestromt.

Wie bereits in Verbindung mit Figur 6 und 7a erläutert, weist der geformte Leiter 139 in besonderer Ausgestaltung eine geringere Breite in Umfangsrichtung auf als der Isolierstoff bzw. als die Stegbreite B_{Iso}. Dadurch, dass der Innenring 150 des Lagers 49 mit seiner nach radial innen gerichteten Seite bzw. Innenzylindermantelfläche die Welle 53 kontaktiert, kann die elektrostatische Ladung von der Welle 43 auf den Innenring 150 übertragen werden. Von dort fließt der Strom vom Innenring auf den geformten Leiter 139 und von dort wiederum auf den Verbindungsleiter 103, der mit dem Schleifring 79 verbunden ist. Es ist somit deutlich, dass das Wälzlager 49 abstützende Wellenende 43 eine elektrische Verbindung zwischen dem geformten Leiter 139 und dem Schleifring 79 ist. Der Schleifring 79 wiederum ist über seine Bürste und den Regler mit der Masse der Umgebung verbunden, so dass die elektrostatische Elektrizität so abgeleitet werden kann. Daraus ergibt sich, dass der geformte Leiter 139 das Wellenende 43 nur mittelbar kontaktiert. Wie in Figur 12 zu erkennen ist, ist zwischen dem geformten Leiter 139 und den Schlitzwänden 159 und 160 ein Abstand 162 bzw. 163 vorhanden.

Nachfolgend wird das Herstellungsverfahren beschrieben. Wie bereits zuvor, beispielsweise zu Figur 4, beschrieben, wird in einem Schritt zumindest eine Verbindungsleitung 103 mit dem elektrisch isolierenden Halter 100 verbunden. Dieser Verbindungsschritt wird vorzugsweise durch einen Umspritzvorgang in einer geschlossenen Gießform durchgeführt. Gemäß der bevorzugten Ausführungsform wird in einem anderen Schritt dieselbe Verbindungsleitung 103 unmittelbar mit einem elektrisch leitfähigen Leiter 139 aus einem Verbundwerkstoff verbunden. Der Verbundwerkstoff weist dabei elektrisch leitfähige und elektrisch nicht leitfähige Anteile auf. Es ist dabei unerheblich, ob der geformte Leiter 139 zuerst an die Verbindungsleitung 103 gespritzt wird, oder nach dem Umspritzen des Halters 100.

Alternativ kann auch vorgesehen sein, dass das Halbzeug aus Verbindungsleiter 103 mit Schleifring 79 bzw. Verbindungsleiter 106 mit Schleifring 81 in einen bereits vorgefertigten Halter 100 einsetzbar ist.

Wie gemäß den Figuren 7a bis 7e dargestellt, in Verbindung mit Figur 4, ist vorgesehen, dass die Verbindungsleitung 103 über einen Abschnitt 148 in Richtung ihrer Längenerstreckung, d.h. in der Richtung, in der die beiden Schleifringe 79 und 81 beabstandet sind, sowohl von dem elektrisch isolierenden Halter 100, als auch von dem elektrisch leitfähigen geformten Leiter 139 aus dem Verbundwerkstoff umgeben ist. Es wird dabei eine gemeinsame Hülle gebildet, wobei sich der isolierende Halter 100 und der elektrisch leitfähige Leiter 139 zu der gemeinsamen Hülle 170, siehe Figur 7, ergänzen. Der elektrisch leitfähige Leiter 139 wird vorzugsweise um einen Oberflächenabschnitt der Verbindungsleitung 103 gespritzt.

Gemäß zu der in Figur 9 vorgestellten Variante ist vorgesehen, dass der elektrisch leitfähige Leiter 139 aus dem Verbundwerkstoff vorgefertigt ist und als solches Bauteil mit der Verbindungsleitung 103 gefügt wird.

Gemäß der bevorzugten Ausführung ist vorgesehen, dass der elektrisch isolierende Halter 100 durch Umspritzen zumindest der einen Verbindungsleitung 103 und anschließendem Erstarren gefertigt ist. Der Halter 100 trägt auf seiner Außenseite mindestens einen Schleifring 79, der die Verbindungsleitung 103 elektrisch kontaktiert. Gemäß Darstellung in Figur 4 ist vorgesehen, dass beim Anspritzen des Halters 100 ein Längenabschnitt 148 der Verbindungsleitung 103 von Isolierstoff 101 ausgespart bleibt (Bildung einer Aussparung) und ein Endabschnitt der Verbindungsleitung 103 ebenfalls frei bleibt und zum Verbinden mit einer Erregerwicklung 61 dient. Der elektrisch leitfähige Leiter 139 wird dabei vorzugsweise aus dem bereits erwähnten Verbundwerkstoff an die Verbindungsleitung 103 gespritzt und ergänzt dabei vorzugsweise die Aussparung 144 des Isolierstoffs 101 vollständig.

Für den Fall, dass eine Prüfung der Erregerspule 61 nach der Montage auf den Rotor 40 für nicht erforderlich gehalten wird, kann auch vorgesehen sein, den geformten Leiter 139 als vollständige Hülle um den Verbindungsleiter 103 vorzusehen. Der geformte Leiter 139 kann auch lediglich an der Innenseite des Leiters 103 angeordnet sein und somit eine direkte Verbindung in dem Schlitz 153 sein.

Der geformte Leiter 139 soll zwischen der Welle 43 und dem Schleifring 79 einen Widerstand von 10kΩ bis 10MΩ darstellen. Innerhalb dieser Grenzen ist die Funktion gesichert: es wird einerseits genug Ladung pro Zeiteinheit abgeführt, so dass sich keine statischen Spannungen aufbauen können, andererseits ist der Widerstand groß genug, um eine einwandfreie Funktion der Erregerwicklung 61 zu ermöglichen.

## Patentansprüche

1. Schleifringbaugruppe (76) für einen Rotor (40) einer elektrischen Maschine (10), insbesondere Drehstromgenerator, mit zumindest einem ersten Schleifring (79), wobei in einem Isolierstoff (101) der Schleifringbaugruppe (76) abschnittsweise zumindest ein erster Verbindungsleiter (103) gehalten ist, der mit dem zumindest einen ersten Schleifring (79) elektrisch leitfähig verbunden ist, und mit einem vom ersten Schleifring (79) abgewandten Ende (115) des Verbindungsleiters (103), das für eine elektrische Verbindung mit einer Erregerspule (61) vorgesehen ist, **dadurch gekennzeichnet, dass** die Schleifringbaugruppe (76) einen weiteren geformten Leiter (139) aufweist, der eine direkte elektrische Verbindung von dem ersten Verbindungsleiter (103) zu einer Oberfläche (142) der Schleifringbaugruppe (76) bildet die nicht durch Eisen-bzw. Magnetteile des Rotors (40) unmittelbar Kontaktiert wird, wobei entweder der weitere geformte Leiter (139) als separates Bauteil auf den zumindest einen ersten Verbindungsleiter (103) aufgesetzt ist oder der weitere geformte Leiter (139) auf den zumindest einen ersten Verbindungsleiter (103) angeformt ist.

2. Schleifringbaugruppe nach Anspruch 1, **dadurch gekennzeichnet, dass** die Schleifringbaugruppe (76) eine Drehachse (133) aufweist und der weitere geformte Leiter (139) mit einem Bereich seines Materials einen Hinterschnitt (145) des Verbindungsleiters (103) hintergreift und dadurch der weitere geformte Leiter (139) nach radial außen in seiner Lage gesichert ist.

3. Schleifringbaugruppe nach einem der vorstehenden Ansprüche, **dadurch gekennzeichnet, dass** der weitere geformte Leiter (139) eine Leitfähigkeit von 1E5 Ωcm bis 1E12 Ωcm aufweist.

4. Schleifringbaugruppe nach einem der vorstehenden Ansprüche, **dadurch gekennzeichnet, dass** der weitere geformte Leiter (139) zwischen dem ersten Schleifring (79) und dem vom ersten Schleifring (79) abgewandten Ende (115) des Verbindungsleiters (103) angeordnet ist.

5. Schleifringbaugruppe nach einem der Ansprüche 1 bis 3, **dadurch gekennzeichnet, dass** der erste Schleifring (79) zwischen dem vom ersten Schleifring (79) abgewandten Ende (115) des Verbindungsleiters (103) und dem weiteren geformten Leiter (139) angeordnet ist.

6. Schleifringbaugruppe nach einem der vorstehenden Ansprüche, **dadurch gekennzeichnet, dass** der weitere geformte Leiter (139) einen höheren spezifischen elektrischen Widerstand als der Verbindungsleiter (103), jedoch einen kleineren spezifischen elektrischen Widerstand als der Isolierstoff (101) hat.

7. Schleifringbaugruppe nach dem vorstehenden Anspruch, **dadurch gekennzeichnet, dass** der weitere geformte Leiter (139) aus einem leitfähigen polymeren Verbundwerkstoff besteht.

8. Schleifringbaugruppe nach dem vorstehenden Anspruch, **dadurch gekennzeichnet, dass** der weitere geformte Leiter (139) den Verbindungsleiter (103) im wesentlichen U-förmig bzw. den gesamten Querschnitt des Verbindungsleiters (103) umgreift.

9. Schleifringbaugruppe nach dem vorstehenden Anspruch, **dadurch gekennzeichnet, dass** der erste Verbindungsleiter (103) von dem weiteren geformten Leiter (139) in einem axialen Abschnitt (148) überdeckt ist und dort der erste Verbindungsleiter (103) von Isolierstoff (101) der Schleifringbaugruppe (76) zumindest teilweise umgriffen ist, wobei eine Breite des Isolierstoffs (101) in Umfangsrichtung (s_{U}) größer als eine Breite des weiteren geformten Leiters (139) in Umfangsrichtung (s_{U}) ist.

10. Schleifringbaugruppe nach einem der vorstehenden Ansprüche, **dadurch gekennzeichnet, dass** der weitere geformte Leiter (139) an seiner axialen Position und seiner Winkelposition einen größeren Radius (R_{L}) der Schleifringbaugruppe (76) definiert als diese an anderer Winkelposition der gleichen axialen Position (148) aufweist.

11. Elektrische Maschine, insbesondere Drehstromerzeuger für Kraftfahrzeuge, mit einem Rotor (40), der eine Erregerspule (61) trägt, wobei eine Schleifringbaugruppe (76) nach einem der vorstehenden Ansprüche zur Stromversorgung der Erregerspule (61) dient und die Oberfläche (142) Eisen-bzw. Magnetteile des Läufen nicht unmittelbar kontaktiert.

12. Elektrische Maschine nach dem vorstehenden Anspruch, **dadurch gekennzeichnet, dass** der Rotor (40) schleifringseitig ein Wellenende (43) aufweist und das Wellenende (43) einen Schlitzwände (159, 160) aufweisenden Schlitz (153) aufweist, der sich in Axialrichtung erstreckt, wobei der zumindest eine Verbindungsleiter (103) in dem Schlitz (153) angeordnet ist.

13. Elektrische Maschine nach dem vorstehenden Anspruch, **dadurch gekennzeichnet, dass** der geformte Leiter (139) das Wellenende (43) nur mittelbar kontaktiert.

14. Elektrische Maschine nach dem vorstehenden Anspruch, **dadurch gekennzeichnet, dass** zwischen dem geformten Leiter (139) und den Schlitzwänden (159, 160) ein Abstand (162) vorhanden ist.

15. Elektrische Maschine nach einem der vorstehenden Ansprüche 11 bis 14, **dadurch gekennzeichnet, dass** ein das Wellenende (43) abstützendes Wälzlager (49) eine elektrische Verbindung zwischen den magnetischen Teilen des Rotors (40) und dem geformten Leiter (139) ist.

16. Elektrische Maschine nach dem vorstehenden Anspruch, **dadurch gekennzeichnet, dass** das Wälzlager (49) den geformten Leiter (139) komprimiert und dadurch zur Ausbildung einer guten elektrischen Kontaktstelle zwischen dem geformten Leiter (139) und einem Wälzlagerring (150) dient.

17. Verfahren zur Herstellung einer Schleifringbaugruppe (76) für eine elektrische Maschine, insbesondere Drehstromgenerator, wobei in einem Schritt zumindest ein Verbindungsleiter (103) mit einem elektrisch isolierenden Halter (100), insbesondere durch einen Umspritzvorgang, verbunden wird, und in einem anderen Schritt der Verbindungsleiter unmittelbar mit einem elektrisch leitfähigen Leiter (139) aus einem Verbundwerkstoff verbunden wird, wobei der Verbundwerkstoff elektrisch leitfähige und elektrisch nicht leitfähige Anteile aufweist und dazu vorgesehen ist, Eisen-bzw. Magnetteile eines Rotors (40) einer elektrischen Maschine (10) nicht unmittelbar zu kontaktieren.

18. Verfahren nach Anspruch 17, **dadurch gekennzeichnet, dass** der Verbindungsleiter (103) über einen Abschnitt in Richtung seiner längeren Erstreckung sowohl von dem elektrisch isolierenden Halter (100) als auch von dem elektrisch leitfähigen, geformten Leiter (139) aus dem Verbundwerkstoff umgeben ist, so dass eine gemeinsame Hülle gebildet wird, wobei sich der isolierende Halter (100) und der elektrisch leitfähige, geformte Leiter (139) zu der gemeinsamen Hülle ergänzen.

19. Verfahren nach Anspruch 17 oder 18 **dadurch gekennzeichnet, dass** der elektrisch leitfähige, geformte Leiter (139) um Oberflächenabschnitte des Verbindungsleiters (103) gespritzt wird.

20. Verfahren nach Anspruch 17 oder 18, **dadurch gekennzeichnet, dass** der elektrisch leitfähige Leiter (139) aus dem Verbundwerkstoff vorgefertigt ist und als solches Bauteil mit dem Verbindungsleiter (103) gefügt wird.

21. Verfahren nach einem der Ansprüche 17 bis 20, **dadurch gekennzeichnet, dass** der elektrisch isolierende Halter (100) durch Umspritzen zumindest des einen Verbindungsleiters (103) und anschließendem Erstarren gefertigt ist.

22. Verfahren nach Anspruch 21, **dadurch gekennzeichnet, dass** der Halter (100) auf seiner Außenseite mindestens einen Schleifring (79) trägt, der den Verbindungsleiter (103) elektrisch kontaktiert.

23. Verfahren nach Anspruch 21 oder 22, dass beim Anspritzen des Halters (100) ein Längenabschnitt des Verbindungsleiters (103) von Isolierstoff (101) ausgespart bleibt (144) und ein Ende (115) des Verbindungsleiters (103) ebenfalls frei bleibt und zum Verbinden mit einer Erregerwicklung (61) dient.

24. Verfahren nach Anspruch 21, 22 oder 23, **dadurch gekennzeichnet, dass** auch der elektrisch leitfähige, geformte Leiter (139) aus dem Verbundwerkstoff an den Verbindungsleiter (103) gespritzt wird und vorzugsweise eine Aussparung (144) des Isolierstoffs (101) vollständig ergänzt.

25. Verfahren nach Anspruch 21, 22 oder 23, **dadurch gekennzeichnet, dass** der elektrisch leitfähige, geformte Leiter (139) aus dem Verbundwerkstoff an den Verbindungsleiter (103) gespritzt wird, wobei dieser Schritt vor dem Anspritzen des Halters (100) an die Schleifringe (79, 81) und den ersten Verbindungsleiter (103) erfolgt.

## Claims

1. Slip-ring assembly (76) for a rotor (40) of an electrical machine (10), in particular a three-phase generator, comprising at least one first slip ring (79), wherein at least one first connecting conductor (103) is held, in sections, in an insulating material (101) of the slip-ring assembly (76), the said first connecting conductor being electrically conductively connected to the at least one first slip ring (79), and comprising an end (115) of the connecting conductor (103), which end is averted from the first slip ring (79) and is provided for electrical connection to a field coil (61), **characterized in that** the slip-ring assembly (76) has a further shaped conductor (139) which forms a direct electrical connection from the first connecting conductor (103) to a surface (142) of the slip-ring assembly (76) which is not in direct contact with iron-core or magnetic parts of the rotor (40), wherein either the further shaped conductor (139) is mounted on the at least one first connecting conductor (103) as a separate component or the further shaped conductor (139) is integrally formed on the at least one first connecting conductor (103).

2. Slip-ring assembly according to Claim 1, **characterized in that** the slip-ring assembly (76) has a rotation axis (133), and the further shaped conductor (139), by way of a region of its material, engages behind an undercut (145) of the connecting conductor (103), and as a result the further shaped conductor (139) is secured in its position radially to the outside.

3. Slip-ring assembly according to either of the preceding claims, **characterized in that** the further shaped conductor (139) has a conductivity of 1E5 Ωcm to 1E12 Ωcm.

4. Slip-ring assembly according to one of the preceding clams, **characterized in that** the further shaped conductor (139) is arranged between the first slip ring (79) and that end (115) of the connecting conductor (103) which is averted from the first slip ring (79).

5. Slip-ring assembly according to one of Claims 1 to 3, **characterized in that** the first slip ring (79) is arranged between that end (115) of the connecting conductor (103) which is averted from the first slip ring (79) and the further shaped conductor (139).

6. Slip-ring assembly according to one of the preceding claims, **characterized in that** the further shaped conductor (139) has a higher specific electrical resistance than the connecting conductor (103), but has a lower specific electrical resistance than the insulating material (101).

7. Slip-ring assembly according to one of the preceding claims, **characterized in that** the further shaped conductor (139) is composed of a conductive polymeric composite material.

8. Slip-ring assembly according to the preceding claim, **characterized in that** the further shaped conductor (139) surrounds the connecting conductor (103) in a substantially U-shaped manner or surrounds the entire cross section of the connecting conductor (103).

9. Slip-ring assembly according to the preceding claim, **characterized in that** the first connecting conductor (103) is covered by the further shaped conductor (139) in an axial section (148), and, there, the first connecting conductor (103) is at least partially surrounded by insulating material (101) of the slip-ring assembly (76), wherein a width of the insulating material (101) in the circumferential direction (s_{U}) is greater than a width of the further shaped conductor (139) in the circumferential direction (s_{U}).

10. Slip-ring assembly according to one of the preceding claims, **characterized in that** the further shaped conductor (139), in its axial position and its angular position, defines a larger radius (R_{L}) of the slip-ring assembly (76) than it has in another angular position of the same axial position (148).

11. Electrical machine, in particular three-phase generator for motor vehicles, comprising a rotor (40) which is fitted with a field coil (61), wherein a slip-ring assembly (76) according to one of the preceding claims serves to supply current to the field coil (61), and the surface (142) does not make direct contact with iron-core or magnetic parts of the rotor.

12. Electrical machine according to the preceding claim, **characterized in that** the rotor (40) has a shaft end (43) on the slip-ring side, and the shaft end (43) has a slot (153) which has slot walls (159, 160) and extends in the axial direction, wherein the at least one connecting conductor (103) is arranged in the slot (153).

13. Electrical machine according to the preceding claim, **characterized in that** the shaped conductor (139) makes only indirect contact with the shaft end (143).

14. Electrical machine according to the preceding claim, **characterized in that** there is a distance (162) between the shaped conductor (139) and the slot walls (159, 160).

15. Electrical machine according to one of the preceding Claims 11 to 14, **characterized in that** a roller bearing (149) which supports the shaft end (43) is an electrical connection between the magnetic parts of the rotor (40) and the shaped conductor (139).

16. Electrical machine according to the preceding claim, **characterized in that** the roller bearing (49) compresses the shaped conductor (139) and as a result serves to form an effective electrical contact point between the shaped conductor (139) and a roller bearing ring (150).

17. Method for producing a slip-ring assembly (76) for an electrical machine, in particular a three-phase generator, wherein, in one step, at least one connecting conductor (103) is connected to an electrically insulating holder (100), in particular by way of an encapsulation process, and, in another step, the connecting conductor is directly connected to an electrically conductive conductor (139) which is composed of a composite material, wherein the composite material has electrically conductive and electrically non-conductive portions and is provided for the purpose of preventing direct contact being made with iron-core or magnetic parts of a rotor (40) of an electrical machine (10).

18. Method according to Claim 17, **characterized in that** the connecting conductor (103) is surrounded, over a section in the direction of its longitudinal extent, both by the electrically insulating holder (100) and also by the electrically conductive, shaped conductor (139) which is composed of the composite material, so that a common sheath is formed, wherein the insulating holder (100) and the electrically conductive, shaped conductor (139) complement each other to form the common sheath.

19. Method according to Claim 17 or 18, **characterized in that** the electrically conductive, shaped conductor (139) is moulded around surface sections of the connecting conductor (103).

20. Method according to Claim 17 or 18, **characterized in that** the electrically conductive conductor (139) is prefabricated from the composite material and is joined to the connecting conductor (103) as a component of this kind.

21. Method according to one of Claims 17 to 20, **characterized in that** the electrically insulating holder (100) is produced by encapsulating at least the one connecting conductor (103), and subsequent setting.

22. Method according to Claim 21, **characterized in that** the holder (100) is fitted on its outer side with at least one slip ring (79) which makes electrical contact with the connecting conductor (103).

23. Method according to Claim 21 or 22, that, when the holder (100) is moulded on, a length section of the connecting conductor (103) remains clear (144) of insulating material (101) and an end (115) of the connecting conductor (103) likewise remains free and serves for connection to a field winding (61).

24. Method according to Claim 21, 22 or 23, **characterized in that** the electrically conductive, shaped conductor (139) which is composed of the composite material is also moulded onto the connecting conductor (103) and preferably fully complements a cutout (144) in the insulating material (101).

25. Method according to Claim 21, 22 or 23, **characterized in that** the electrically conductive, shaped conductor (139) which is composed of the composite material is moulded onto the connecting conductor (103), wherein this step is performed before the holder (100) is moulded onto the slip rings (79, 81) and the first connecting conductor (103).

## Revendications

1. Module à bagues collectrices (76) pour le rotor (40) d'une machine électrique (10), notamment d'un alternateur, comprenant au moins une première bague collectrice (79), dans lequel au moins un premier conducteur de connexion (103) est maintenu en partie dans un matériau isolant (101) du module à bagues collectrices (76), lequel conducteur est connecté de manière électriquement conductrice à l'au moins une première bague collectrice (79), et comprenant une première extrémité (115) du conducteur de connexion (103) tournée en sens opposé à la première bague collectrice (79), laquelle première extrémité est prévue pour une connexion électrique à une bobine d'excitation (61), **caractérisé en ce que** le module à bagues collectrices (76) comporte un autre conducteur formé (139) qui forme une connexion électrique directe du premier conducteur de connexion (103) à une surface (142) du module à bagues collectrices (76) qui n'est pas directement en contact par l'intermédiaire de parties en fer ou magnétiques du rotor (40), dans lequel soit l'autre conducteur formé (139) est installé sous la forme d'un composant séparé sur l'au moins un premier conducteur de connexion (103), soit l'autre conducteur formé (139) est moulé sur l'au moins un premier conducteur de connexion (103).

2. Module à bagues collectrices selon la revendication 1,
**caractérisé en ce que** le module à bagues collectrices (76) présente un axe de rotation (133) et **en ce que** l'autre conducteur formé (139) vient en prise par l'arrière, au moyen d'une région de son matériau, avec une section arrière (145) du conducteur de connexion (103) et ainsi, l'autre conducteur formé (139) est fixé en position radialement vers l'extérieur.

3. Module à bagues collectrices selon l'une quelconque des revendications précédentes,
**caractérisé en ce que** l'autre conducteur formé (139) présente une conductivité de 1E5 Ωcm à 1E12 Ωcm.

4. Module à bagues collectrices selon l'une quelconque des revendications 1 à 3,
**caractérisé en ce que** l'autre conducteur formé (139) est disposé entre la première bague collectrice (79) et l'extrémité (115) du conducteur de connexion (103) qui est tournée à l'opposé de la première bague collectrice (79).

5. Module à bagues collectrices selon l'une quelconque des revendications 1 à 3,
**caractérisé en ce que** la première bague collectrice (79) est disposée entre l'extrémité (115) du conducteur de connexion (103) qui est tournée à l'opposé de la première bague collectrice (79) et l'autre conducteur formé (139).

6. Module à bagues collectrices selon l'une quelconque des revendications précédentes,
**caractérisé en ce que** l'autre conducteur formé (139) présente une résistance électrique spécifique plus élevée que le conducteur de connexion (103) mais présente une résistance électrique spécifique inférieure à celle du matériau isolant (101).

7. Module à bagues collectrices selon la revendication précédente,
**caractérisé en ce que** l'autre conducteur formé (139) est constitué d'un matériau composite polymère conducteur.

8. Module à bagues collectrices selon la revendication précédente,
**caractérisé en ce que** l'autre conducteur formé (139) entoure selon une forme sensiblement en U le conducteur de connexion (103) ou entoure la totalité du conducteur de connexion (103).

9. Module à bagues collectrices selon la revendication précédente,
**caractérisé en ce que** le premier conducteur de connexion (103) est recouvert par l'autre conducteur formé (139) dans une partie axiale (148) et **en ce que** le premier conducteur de connexion (103) est au moins partiellement entouré à cet endroit par le matériau isolant (101) du module à bagues collectrices (76), dans lequel une largeur du matériau isolant (101) dans la direction circonférentielle (s_{U}) est supérieure à une largeur de l'autre conducteur formé (139) dans la direction circonférentielle (s_{U}).

10. Module à bagues collectrices selon l'une quelconque des revendications précédentes,
**caractérisé en ce que** l'autre conducteur formé (139) définit à sa position axiale et à sa position angulaire un rayon (R_{L}) du module à bagues collectrices (76) supérieur à sa valeur à une autre position angulaire et à la même position axiale (148).

11. Machine électrique, notamment alternateur destiné à un véhicule automobile, comportant un rotor (40) qui porte une bobine d'excitation (61), dans lequel un module à bagues collectrices (76) selon l'une quelconque des revendications précédentes, est utilisé pour alimenter en courant la bobine d'excitation (61) et la surface (142) n'est pas directement en contact avec des parties en fer ou magnétiques du rotor.

12. Machine électrique selon la revendication précédente, **caractérisée en ce que** le rotor (40) comporte une extrémité d'arbre (43) du côté de la bague et **en ce que** l'extrémité d'arbre (43) présente une fente (153) ayant des parois de fente (159, 160), laquelle fente s'étend dans la direction axiale, dans lequel l'au moins un conducteur de connexion (103) est disposé dans la fente (153).

13. Machine électrique selon la revendication précédente, **caractérisée en ce que** le conducteur formé (139) ne vient au contact de l'extrémité d'arbre (43) qu'indirectement.

14. Machine électrique selon la revendication précédente, **caractérisée en ce qu'**un espace (162) est présent entre le conducteur formé (139) et les parois de fente (159, 160).

15. Machine électrique selon l'une quelconque des revendications 11 à 14 précédentes, **caractérisée en ce qu'**un palier à rouleaux (49) supportant l'extrémité d'arbre (43) est en liaison électrique entre les parties magnétiques du rotor (40) et le conducteur formé (139).

16. Machine électrique selon la revendication précédente, **caractérisée en ce que** le palier à rouleaux (49) comprime le conducteur formé (139) et sert ainsi à former un point de contact électrique de bonne qualité entre le conducteur formé (139) et l'anneau de paliers à rouleaux (150).

17. Procédé de fabrication d'un module à bagues collectrices (76) pour une machine électrique, notamment un alternateur, dans lequel, lors d'une étape, au moins un conducteur de connexion (103) est connecté à un support électriquement isolant (100), notamment par l'intermédiaire d'un processus d'injection périphérique, et lors d'une autre étape, le conducteur de connexion est directement connecté à un conducteur électrique (139) constitué d'un matériau composite, dans lequel le matériau composite présente des parties électriquement conductrices et électriquement non conductrices et est ainsi prévu pour ne pas être directement en contact avec des parties en fer ou magnétiques du rotor (40) d'une machine électrique (10).

18. Procédé selon la revendication 17, **caractérisé en ce que** le conducteur de connexion (103) est entouré par le matériau composite sur une partie, dans la direction de son extension longitudinale, à la fois par le support électriquement isolant (100) et par le conducteur électrique formé (139), de manière à former un manchon commun, dans lequel le support isolant (100) et le conducteur électrique formé (139) se complètent pour former le manchon commun.

19. Procédé selon la revendication 17 ou 18, **caractérisé en ce que** le conducteur électrique formé (139) est injecté de manière périphérique autour de la partie de surface du conducteur de connexion (103).

20. Procédé selon la revendication 17 ou 18, **caractérisé en ce que** le conducteur électrique (139) est préfabriqué à partir du matériau composite et est joint au conducteur de connexion (103) sous la forme d'un composant de ce type.

21. Procédé selon l'une quelconque des revendications 17 à 20, **caractérisé en ce que** le support électriquement isolant (100) est réalisé par injection périphérique de l'au moins un conducteur de connexion (103) puis par solidification.

22. Procédé selon la revendication 21, **caractérisé en ce que** le support (100) porte sur sa face extérieure au moins une bague collectrice (79) qui est en contact électrique avec le conducteur de connexion (103).

23. Procédé selon la revendication 21 ou 22, que, lors de l'injection du support (100), une partie longitudinale du conducteur de connexion (103) reste (144) dépourvue de matériau isolant (101) et en ce qu'une extrémité (115) du conducteur de connexion (103) reste également libre et est utilisée pour la connexion à un enroulement d'excitation (61).

24. Procédé selon la revendication 21, 22 ou 23, **caractérisé en ce que** le conducteur électrique formé (139) est injecté à partir du matériau composite sur le conducteur de connexion (103) et **en ce qu'**un évidement (144) du matériau isolant (101) est de préférence entièrement complété.

25. Procédé selon la revendication 21, 22 ou 23, **caractérisé en ce que** le conducteur électrique formé (139) est injecté à partir du matériau composite sur le conducteur de connexion (103), dans lequel ladite étape est effectuée avant l'injection du support (100) sur la bague collectrice (79, 81) et le premier conducteur de connexion (103).
